# EUROPÄISCHE PATENTANMELDUNG

(11) **EP 3 503 007 A1**
(43) Veröffentlichungstag der Anmeldung: **26.06.2019**
(21) Anmeldenummer: 18215504.4
(22) Anmeldetag: 21.12.2018
(51) Int. Cl.: G06Q 30/02

(54) **VERFAHREN ZUM AUSLIEFERN VON WERBEMITTELN SOWIE SYSTEM ZUR DURCHFÜHRUNG DES VERFAHRENS**

(30) Priorität: 22.12.2017 DE 102017131270
(71) Anmelder: SevenOne Media GmbH, 85774 Unterföhring (DE)
(72) Erfinder: Matzanke, Martin, 82256 Fürstenfeldbruck (DE); Matthiesen, Pascal, 80639 München (DE); von Klipstein, Tobias, 86161 Augsburg (DE)
(74) Vertreter: Herrmann, Uwe

(57) **Zusammenfassung**

Die vorliegende Erfindung betrifft ein Verfahren zum Ausliefern von Werbemitteln von einem Werbemittelserver an eine Clienteinrichtung vor, während oder nach dem Abruf von medialen Inhalten von einem CDN-System, wobei die Clienteinrichtung zur Abfrage von Werbemitteln die Zieladresse des Werbemittelservers verschlüsselt und eine Anfrage an das CDN-System stellt, in der die verschlüsselte Zieladresse des Werbemittelservers enthalten ist, und wobei das CDN-System die verschlüsselte Zieladresse aus der Anfrage extra-hiert und diese entschlüsselt, um Werbemittel von dem adressierten Werbemittelserver abzurufen und diese der Clienteinrichtung bereitzustellen.

## Beschreibung

Die Erfindung betrifft ein Verfahren zum Ausliefern von Werbemitteln von einem Werbemittelserver an eine Clienteinrichtung vor, während oder nach dem Abruf von Informationsinhalten von einem CDN-System.

Ein Großteil der über das Internet publizierten Informationsinhalte ist kostenlos und wird vom Betreiber durch Werbeeinnahmen finanziert. Dazu werden Werbeinhalte und/oder Werbemittel auf der Webseite des Betreibers eingeblendet, um die Aufmerksamkeit des Benutzers auf sich zu ziehen. Neben der Einblendung von statischem Bildmaterial, das einfach in den anzuzeigenden HTML-Code der Webseite eingebettet wird, gewinnt das Einspielen von ganzen Werbefilmen während der Videowiedergabe immer mehr an Bedeutung. Der Nutzer startet hierbei den gewünschten Videoinhalt, wobei ihm vorab, während dessen oder am Ende des Videoinhaltes ein Werbefilm angezeigt wird. Das Abspielen von Videoinhalten und Werbematerial erfolgt in der Regel über dieselbe Playersoftware am Nutzerendgerät.

In der Regel ist es sinnvoll, die Werbeinhalte auf Zielgruppen zuzuschneiden, denn der Nutzer wird nur die für ihn interessanten Werbeinhalte beachten und deren Einblendung akzeptieren. Diese Vorgehensweise wird im Fachjargon auch als "Targeting" bezeichnet. Für die Auslieferung auf den jeweiligen Besucher zugeschnittener Werbemittel werden spezielle Werbemittelserver eingesetzt, die für jeden einzelnen Nutzer aus der Werbedatenbank passende Werbemittel heraussuchen und an das Endgerät des Nutzers ausliefern. In der Regel erhält die Clienteinrichtung beim Abruf eines Informationsservers Instruktionen zusammen mit einer Zieladresse eines Werbemittelservers. Die Clienteinrichtung kontaktiert daraufhin automatisch den verlinkten Werbemittelserver und ruft die zur Verfügung stehenden Werbemittel ab. Beim Surfen auf einer Webseite kommuniziert der Webbrowser des Nutzers automatisch mit dem Werbemittelserver über den Player.

Aus Sicht des Webseitenbetreibers besteht das Bedürfnis, solche Werbeauslieferungen möglichst vollständig und fehlerfrei durchzuführen, um ausreichend Einnahmen für das kostenlose Angebot erwirtschaften zu können. Derzeit befinden sich auf dem Markt etwaige Softwareprogramme zur Installation auf dem Endgerät des Nutzers, d.h. der Clienteinrichtung, die ausgehende Werbeanfragen überwachen und gegebenenfalls blockieren, wodurch das Einblenden von etwaigen Werbemitteln unterdrückt wird. Diese Softwaretools, auch Werbeblocker genannt, prüfen ausgehende Verbindungsversuche der Clienteinrichtung daraufhin, ob diese an einen bekannten Werbemittelserver gerichtet sind. Dazu werden Filterlisten eingesetzt, die bekannte Zieladressen von Werbemittelservern beinhalten. Sofern ein ausgehender Verbindungsaufbau an eine bekannte Zieladresse eines Werbemittelservers gerichtet ist, wird diese aktiv durch das installierte Softwaretool verhindert und dadurch der Abruf von Werbemitteln bzw. Werbeinhalten unterbunden. Zum Erkennen einer ausgehenden Verbindung an einen Werbemittelserver können auch bereits Keywords wie "Werbung" oder "Ad" innerhalb der Adresse ausreichen.

Ein Lösungsansatz zur Umgehung dieser Problematik mit installierten Werbeblockern ist beispielsweise aus der DE 10 2014 016 137 A1 bekannt. Darin wurde vorgeschlagen, die Kommunikation der Clienteinrichtung mit einem Werbemittelserver nicht per normaler http-Verbindung auszuführen, sondern stattdessen sogenannte Web- bzw. Flashsockets einzusetzen. Der Nachteil dieser Lösung besteht in der vergleichsweise aufwendigen Implementierung der Socketverbindung, sowohl auf Clientseite als auch auf Serverseite. Zudem kann es durch die gewählte Verbindungsart zu funktionalen Einschränkungen auf beiden Seiten kommen.

Die vorliegende Erfindung setzt sich daher zur Aufgabe, eine alternative Möglichkeit aufzuzeigen, die eine fehlerfreie Auslieferung von Werbemitteln trotz entsprechend installierter Werbeblocker-Software sicherstellt.

Gelöst wird diese Aufgabe zum einen durch ein Verfahren gemäß den Merkmalen des Anspruchs 1. Vorteilhafte Ausgestaltungen des Verfahrens sind Gegenstand der abhängigen Ansprüche.

Gemäß Anspruch 1 wird ein Verfahren zum Ausliefern von Werbemitteln von einem Werbemittelserver an eine Clienteinrichtung vorgeschlagen. Die Auslieferung von Werbemitteln, insbesondere das Abfragen der entsprechenden Werbemittel und Ausliefern an die Clienteinrichtung kann vor, während oder nach dem Abruf des eigentlichen Informationsinhaltes von einem entsprechenden CDN-System erfolgen.

Ein sogenanntes Content Delivery Network oder auch Content Distribution Network (CDN) ist ein Netz von miteinander verbundenen Servern, welche auf unterschiedlichen Standorte verteilt Knoten (Server) aufweisen und über welches Informationsinhalte, vor allem große Mediendateien oder auch Internetseiten ausgeliefert werden. Das Ziel eines solchen Netzes besteht darin, Speicher und Auslieferungskapazitäten ausreichend skalieren zu können, um auch bei Lastspitzen genügend Ressourcen für eine reibungslose Auslieferung sicherzustellen.

Das Verfahren ist bevorzugt bei Szenarien anwendbar, bei denen ein Nutzer mittels einer Clienteinrichtung eine Website aufruft und einen dort angebotenen Videoinhalt zum clientseitigen Abspielen auswählt. In diesem Fall wird ein in die Webseite, d.h. den HTML-Quellcode eingebetteter Videoplayer ausgeführt. Zum Abspielen des gewünschten medialen Inhaltes ruft der Player aus dem CDN-System den gewünschten medialen Videoinhalt ab. Der Player ist ferner dazu geeignet und auch programmiert, eine Werbemittelanfrage vor, während oder nach dem Abspielen des eigentlichen medialen Inhaltes zu generieren und abzusenden. Daraufhin zur Verfügung gestellte Werbemittel, insbesondere in Form von Werbeanzeigen in Bewegtbild-Format, lassen sich durch den Player vor, während oder nach der Wiedergabe des eigentlichen medialen Inhaltes abspielen.

Die Implementierung des Videoplayers kann vorzugsweise per JavaScript erfolgen. Ebenso ist vorstellbar, dass nach entsprechender Nutzerinteraktion, bspw. durch die Website, eine auf der Clienteinrichtung installierte Playersoftware gestartet und ausgeführt wird. Das erfindungsgemäße Verfahren ist zwar bevorzugt für die Werbungsauslieferung beim Abspielen von medialen Videoinhalten konstruiert, allerdings ist der Einsatz auch bei der Wiedergabe beliebiger (statischer) Informationen, wie Websites oder ähnliches, mit entsprechenden Werbungseinblendungen, sei es in Form von statischen oder bewegten Werbemitteln, denkbar. Der Einfachheit halber wird nachfolgend lediglich von einem Player gesprochen, die Ausführungen gelten jedoch gleichermaßen auch für alternative Anwendungsszenarien.

Die Werbemittel werden von einem dedizierten Werbemittelserver bereitgestellt, der bevorzugt in Abhängigkeit einer Werbemittelanfrage für den jeweiligen Nutzer passende Werbemittel auswählt. Bevorzugt sieht die Clienteinrichtung bzw. die ausgeführte Playersoftware ein oder mehrere Adressen von Werbemittelservern vor, vorzugsweise in Form einer URL, an diese entsprechende Werbemittelanfragen gerichtet werden sollen.

Im Falle eines implementierten und aktiven Werbemittelblockers würde ein derartiger Verbindungsaufbau zwischen der Clienteinrichtung, d.h. dem Videoplayer, und einem entsprechenden Werbemittelserver erkannt und gegebenenfalls blockiert werden. Um dennoch eine Auslieferung von Werbemitteln an die Clienteinrichtung gewährleisten zu können, wird erfindungsgemäß nun vorgesehen, dass die entsprechende Zieladresse des Werbemittelservers von der Clienteinrichtung verschlüsselt wird, insbesondere wird die gespeicherte URL verschlüsselt, vorzugsweise nach dem AES-Standard. Diese verschlüsselte Zieladresse wird dann zusammen mit einer Anfrage an das CDN-System übermittelt. Werbemittel und die eigentlichen medialen Inhalte werden vorzugsweise über unterschiedliche CDN-Systeme ausgespielt. Es besteht jedoch auch die Möglichkeit, dass Werbemittel und mediale Inhalte durch ein einziges CDN-System bereitgestellt werden.

Ein Werbungsblocker, der ausgehende Verbindungsanfragen der Clienteinrichtung nach bekannten Zieladressen von Werbemittelservern scannt, kann die in der Anfrage an das CDN-System enthaltene verschlüsselte Zieladresse des Werbemittelservers nicht mehr als solche identifizieren. Demzufolge wird der Werbungsblocker die Anfrage an das CDN-System nicht blockieren. Sollte der Werbungsblocker dennoch entsprechende Anfragen an das CDN-System blockieren, so wird dies vorzugsweise durch eine im Videoplayer implementierte Logik erkannt, die in diesem Fall auch das Abspielen des eigentlichen medialen Inhaltes unterbinden würde. Der Player würde dann weder Werbemittel noch mediale Inhalte abspielen, was nicht den Interessen des Nutzers entsprechen kann.

Erfindungsgemäß ist weiterhin vorgesehen, dass das CDN-System die empfangene Anfrage der Clienteinrichtung dahingehend verarbeitet, dass die darin vorgesehene verschlüsselte Zieladresse extrahiert und entschlüsselt wird, um die Anfrage letztendlich mittelbar oder unmittelbar an den eigentlich adressierten Werbemittelserver weiterreichen zu können. Als Reaktion auf diese Anfrage nach Werbemitteln erhält das CDN-System passende Werbemittel, die der Clienteinrichtung im Anschluss zur Verfügung gestellt werden können.

Die erfindungsgemäße Kernidee des Verfahrens macht es möglich, dass die Kommunikation zwischen Clienteinrichtung und CDN-System auf Grundlage des http-Protokolls erfolgen kann, bspw. erfolgt eine Anfrage der Clienteinrichtung an das CDN-System per einfachem http-Request. Insbesondere wird die verschlüsselte Zieladresse des Werbemittelservers zusammen mit einem http-Request an das CDN-System übermittelt, so beispielsweise der URL des CDN-Systems angefügt. Im Gegensatz zum Stand der Technik ist eine komplizierte und aufwändige Kommunikation mittels Socket-Verbindungen nicht mehr notwendig.

Ferner kann es vorgesehen sein, dass die Clienteinrichtung der Anfrage an das CDN-System neben der verschlüsselten Zieladresse eine Signatur und/oder einen Zeitstempel hinzufügt. Auf diese Weise soll sichergestellt werden, dass das CDN-System nur Anfragen von authentifizierten Clienteinrichtungen bearbeitet. Denkbar ist es beispielsweise, dass die Signatur auf Grundlage der verschlüsselten Zieladresse erstellt wird. Das CDN-System weist entsprechende Mittel auf, um die Signatur auf ihre Gültigkeit zu überprüfen. Mittels eines hinzugefügten Zeitstempels kann sichergestellt werden, dass die Anfrage nur für einen bestimmten Zeitraum ihre Gültigkeit behält.

In diesem Fall ist es besonders vorteilhaft, wenn das CDN-System eine Bereitstellung der Werbemittel an die Clienteinrichtung nur dann veranlasst, wenn die enthaltene Signatur als gültig empfunden würde und die Anfrage anhand des beigefügten Zeitstempels für nicht veraltet erachtet wird. Bspw. überprüft das CDN-System nach Eingang der Anfrage als erstes deren Gültigkeit anhand Signatur und/oder Zeitstempel. Alle nachfolgenden Arbeitsschritte zur Bereitstellung des Werbemittels werden nur dann ausgeführt, wenn die Anfrage als valide erachtet wird.

Gemäß bevorzugter Ausführungsform der Erfindung kann vorgesehen sein, dass das CDN-System wenigstens einen Cachespeicher umfasst, in dem Werbemittel zumindest temporär kurzfristig bereitgehalten werden können. Der Cachespeicher dient dazu, Daten, insbesondere mediale Inhalte, worunter unter anderem auch die Werbemittel fallen, im CDN-System bereithalten zu können, um diese kurzfristig bei entsprechender Anfrage ausliefern zu können. Hierdurch kann allgemein eine schnellere als auch kostengünstigere Auslieferung an die einzelnen Clienteinrichtung erzielt werden. Eine Möglichkeit des Cachespeichers besteht darin, Werbemittel, die bereits in der Vergangenheit einer Clienteinrichtungen zur Verfügung gestellt worden sind, für eine erneute Anfrage der Clienteinrichtung bereitzuhalten.

Bei einer entsprechenden Anfrage einer Clienteinrichtung überprüft das CDN-System in diesem Fall zunächst, ob für die jeweilige Anfrage bereits ein passendes Werbemittel im Cache-Speicher zur Verfügung steht. Dies kann bspw. anhand der der entschlüsselten Zieladresse des Werbemittelservers erfolgen. Ist ein passendes Werbemittel vorhanden, kann der Clienteinrichtung das Werbemittel kurzfristig aus dem Cache-Speicher zur Verfügung gestellt werden. Andernfalls muss ein passendes Werbemittel zunächst vom adressierten Werbemittelserver angefragt werden.

Es ist zwar denkbar, dass das CDN-System die Anfrage der Clienteinrichtung unmittelbar an einen Werbemittelserver weiterreicht, bevorzugt ist jedoch die Zwischenschaltung eines Proxy-Servers. Hierbei ist es denkbar, dass das CDN-System die Anfrage der Clienteinrichtung an einen Proxy-Server weiterleitet, der das Bindeglied zwischen CDN-System und Werbemittelserver bildet.

Für eine entsprechende Weitergabe der Anfrage wird diese um die CDN-seitig entschlüsselte Zieladresse des Werbemittelservers ergänzt. Zusätzlich kann ein User-Agent-String, der die Clienteinrichtung bzw. den dort eingesetzten Webbrowser kennzeichnet, ergänzt werden. Ein User-Agent-String stellt Informationen über Namen und Daten im Header der betrachteten Webseite des Webbrowsers in Form einer Zeichenkette zur Verfügung, welche mit der Anfrage an das CDN-System übertragen wird.

Der Proxy-Server kann anhand der empfangenen entschlüsselten Zieladresse eine Werbemittelanfrage an den adressierten Werbemittelserver richten, um die gewünschten Werbemittel von diesem abzufragen. Diese werden anschliessend and das CDN-System weitergereicht. Das CDN-System kann diese nach Erhalt an die Clienteinrichtung weiterreichen und gegebenenfalls im Cache-Speicher ablegen.

Die Kommunikation mit dem Werbemittelserver erfolgt bevorzugterweise auf Grundlage eines standardisierten Protokolls, beispielsweise auf Grundlage des VAST- oder VPAID-Standards. Bei VAST erzeugt der Werbemittelserver in Reaktion auf eine Anfrage nach Werbemitteln eine VAST XML-Datei, die neben dem Werbemittel etwaige Steuerinformationen zum Abspielen des Werbemittels beinhaltet. Ebenso kann vorgesehen sein, innerhalb des VAST XML-Files lediglich eine Zieladresse auf einen Drittserver einzufügen, von dem die Werbemittel abrufbar sind.

Gemäß weiter bevorzugter Ausführung ist vorgesehen, dass der Proxy-Server eine Cookie-Datenbank umfasst und die vom CDN-System erhaltene Anfrage zunächst auf eine darin enthaltene Nutzerinformation hin überprüft. Diese Nutzerinformation kann der Proxy-Server bspw. aus den Header-Dateien der empfangenen Anfrage ableiten. Bei der Nutzerinformation handelt es sich vorzugsweise um in der Anfrage enthaltene ein oder mehrere Cookies.

Innerhalb der Cookie-Datenbank sind Cookies für unterschiedliche bekannte Nutzer hinterlegt. Anhand der in der Anfrage enthaltenen Nutzerinformation wird daraufhin ermittelt, ob in der Cookie-Datenbank bereits entsprechende Cookie-Dateien vorgesehen sind. Ist dies der Fall, wird bei der Abfrage der Werbemittel von dem adressierten Werbemittelserver die Anfrage zunächst um die dem Nutzer zugeordneten Cookies ergänzt. Dies ermöglicht es dem Werbemittelserver speziell auf den durch den Cookie identifizierten Nutzer zugeschnittene Werbemittel an den Proxy-Server auszuliefern. Sofern innerhalb der Cookie-Datenbank kein passender Eintrag zu dem jeweiligen Nutzer aufgefunden werden kann, wird eine entsprechende Nutzerinformation erstellt und ein passender Datenbankeintrag generiert.

Auf die Anfrage des Proxy-Servers an den Werbemittelserver antwortet dieser mit einer entsprechenden Antwort, die entweder bereits die angefragten Werbemittel beinhaltet oder alternativ eine Umleitung auf einen Drittserver zum dortigen Abruf der Werbemittel beinhaltet. Idealerweise analysiert der Proxy-Server die Rückantwort des Werbemittelserver. Insbesondere werden enthaltene Cookies extrahiert und in der Cookie-Datenbank abgelegt. Bestehende Datenbankeinträge werden gegebenenfalls ergänzt, ersetzt oder aktualisiert.

Es ist bereits bekannt, http-Anfragen eines Webbrowsers mit sogenannten Cache Header-Informationen auszustatten, die Anweisungen zur Zwischenspeicherung einer durch den Webbrowser abgerufenen Information enthalten. In diesem Zusammenhang kann überprüft werden, ob die Antwort des Werbemittelservers einen entsprechenden Cache Header vorsieht. Ist dies nicht der Fall, kann im Proxy-Server ein entsprechender Cache Header erzeugt und mit einem Standard-Wert belegt werden. Bevorzugt ist hierbei jedoch vorgesehen, dass ein vorgegebener Cache Header nur dann ergänzt wird, falls die Dateigröße der bereitgestellten Werbemittel einen vordefinierten Grenzwert überschreitet, bspw. größer als der im System definierte Grenzwert ist.

Das voranstehend beschriebene Verfahren ermöglicht eine zuverlässige und fehlerfreie Auslieferung von Werbeinhalten bei installierten Werbemittelblockern. Die Ausführung der zusätzlichen erfindungsgemäßen Verfahrensschritte ist prinzipiell nur dann notwendig und sinnvoll, wenn auf der Clienteinrichtung ein Werbeblocker installiert und tatsächlich aktiv ist. Vor diesem Hintergrund ist es zweckmäßig, wenn die Clienteinrichtung, insbesondere der Player, vor Verfahrensausführung überprüft, ob entsprechende Werbeblockersoftware aktiv ist. Die Prüfung kann dadurch erfolgen, indem die Clienteinrichtung zunächst eine konventionelle Werbemittelanfrage unmittelbar an den Werbemittelserver richtet. Ist ein solcher Verbindungsaufbau nicht möglich bzw. bleibt der Abruf von Werbemitteln ohne Erfolg, so kann dies als Indiz für einen installierten Werbeblocker dienen. Die Clienteinrichtung schaltet dann auf das erfindungsgemäße Verfahren um, in dem die Zieladresse verschlüsselt und die Anfrage zunächst an das CDN-System gerichtet wird.

Unter Umständen kann es sein, dass ein installierter Werbeblocker nicht nur einen Verbindungsaufbau zum Werbemittelserver blockiert, sondern gegebenenfalls auch etwaige Anfragen an das CDN-System verhindert. In einem solchen Fall soll die Clienteinrichtung bzw. der Videoplayer den Nutzer darauf hinweisen, dass ohne Anzeige von Werbemitteln auch kein medialer Inhalt angezeigt werden kann. Gegebenenfalls kann der Nutzer zusätzlich zur Abschaltung des Werbeblockers aufgefordert werden.

Neben dem erfindungsgemäßen Verfahren betrifft die vorliegende Erfindung zudem ein System zur Durchführung des Verfahrens gemäß der vorliegenden Erfindung. Das System ist dementsprechend mit Mitteln, wie beispielsweise der erfindungsgemäßen Clienteinrichtung, dem CDN-System als auch dem Proxy-Server ausgestattet, die eine entsprechende Ausführungslogik zur Ausführung der erforderlichen Verfahrensschritte implementiert haben. Zur Vermeidung von Wiederholungen wird auf die voranstehenden Ausführungen zum Verfahren verwiesen.

Neben dem System betrifft die Erfindung ebenfalls eine Clienteinrichtung zur Durchführung des erfindungsgemäßen Verfahrens. Dies betrifft beispielsweise einen Videoplayer, der entsprechende Anfragen an einen Werbemittelserver starten und insbesondere eine Verschlüsselung der eigentlichen Zieladresse ausführen kann. Dieser kann weiterhin die verschlüsselte Zieladresse im Zuge einer Anfrage an ein CDN-System an dieses weiterleiten. Darüber hinaus sind auf der Clienteinrichtung Mittel vorgesehen, die gemäß dem erfindungsgemäßen Verfahren einen aktiven Werbeblocker erkennen können.

Weitere Vorteile und Eigenschaften der Erfindung sollen nachfolgend anhand des in den Figuren dargestellten Ausführungsbeispiels näher erläutert werden. Es zeigen:
- Figur 1:: einen Überblick über die einzelnen Systemkomponenten zur Durchführung des erfindungsgemäßen Verfahrens;
- Figur 2a, 2b, 2c1, 2c2:: ein Ablaufdiagramm zur Darstellung des Verfahrens und
- Figur 3:: ein Beispiel für eine Antwort eines Werbemittelservers auf eine gestellte Anfrage nach Werbemitteln in Form eines VAST XML Files.

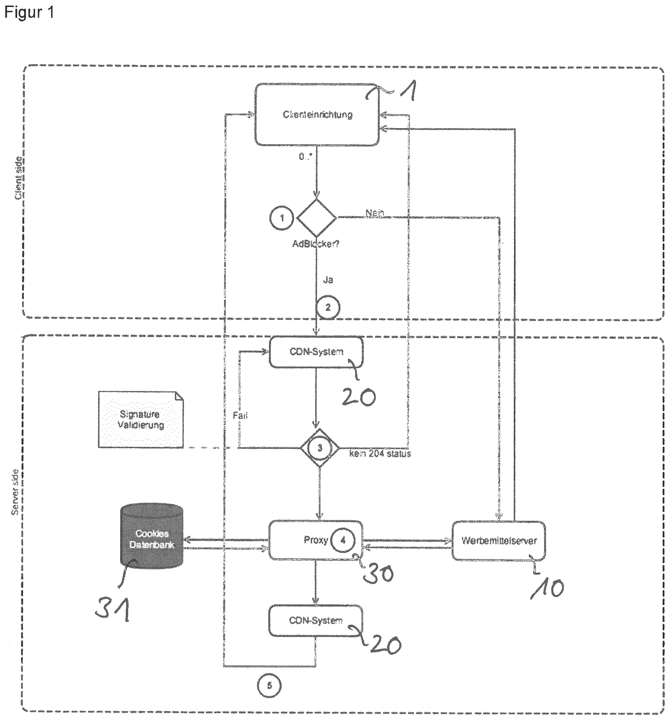

Figur 1 gibt einen kurzen Überblick über die einzelnen Systemkomponenten für die Verfahrensdurchführung. Auf der Clienteinrichtung 1 ist ein passender Webbrowser installiert, mittels dem der Nutzer eine beliebige Website aufrufen kann. In den Quellcode der Website ist eine Applikation eines Videoplayers eingebettet, so dass bei der angezeigten Website auf der Clienteinrichtung ein Videoplayer zur Ausführung kommt, um bspw. etwaige auf der Website angebotene mediale Videoinhalte auf der Clienteinrichtung abspielen zu können. Diese medialen Videoinhalte kann der Player aus dem CDN-System 20 abrufen, die Website bzw. die ausgeführte Videoplayersoftware hat dabei bereits Kenntnis über die Zieladresse des CDN-Systems 20.

Das Abspielen dieser medialen Inhalte ist jedoch werbungsfinanziert und setzt das Abspielen kurze Werbemittel, sogenannter VideoAds voraus. Hierzu sind im ausgeführten Programmcode des Videoplayers, der beispielsweise mittels eines eingebetteten JavaScripts realisiert ist, ein oder mehrere Zieladressen auf einen Werbemittelserver 10 hinterlegt, von denen die Clienteinrichtung 1 passende Werbemittel abrufen soll. Diese Werbemittel können vor, während oder auch nach der Wiedergabe des eigentlichen medialen Inhaltes abgerufen bzw. zur Anzeige gebracht werden.

Bisher war es üblich, dass der Videoplayer 1 eine passende Werbemittelanfrage an den Werbemittelserver 10 richtet, woraufhin dieser mit einem VAST XML-Datei antwortet, das entweder das entsprechende Werbemittel beinhaltet oder alternativ einen weiterführenden Link zur Zieladresse des Werbemittels umfasst. Wie eingangs bereits ausführlich erläutert wurde, können aktive Werbeblocker solche Werbemittelanfragen verhindern und damit die Auslieferung und Anzeige von Werbemitteln unterdrücken.

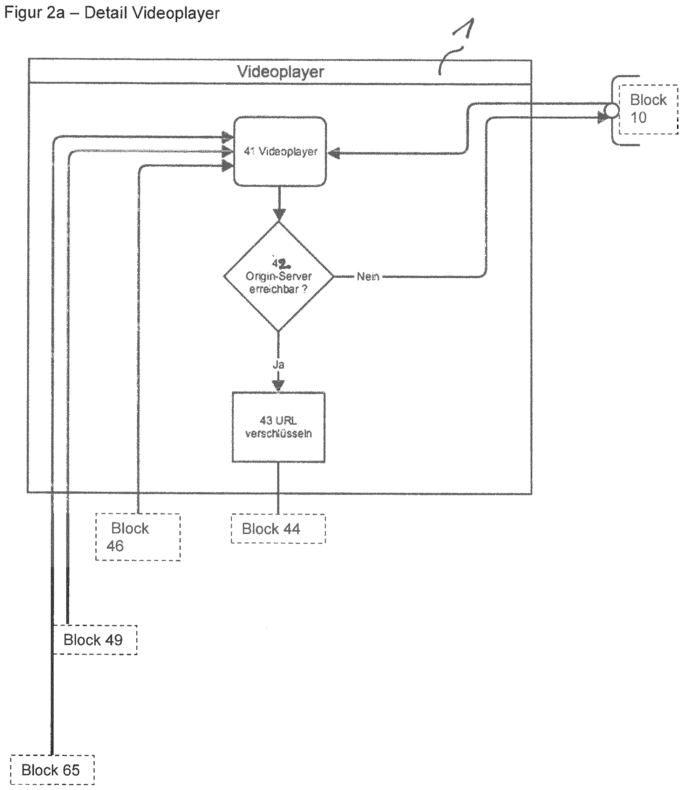

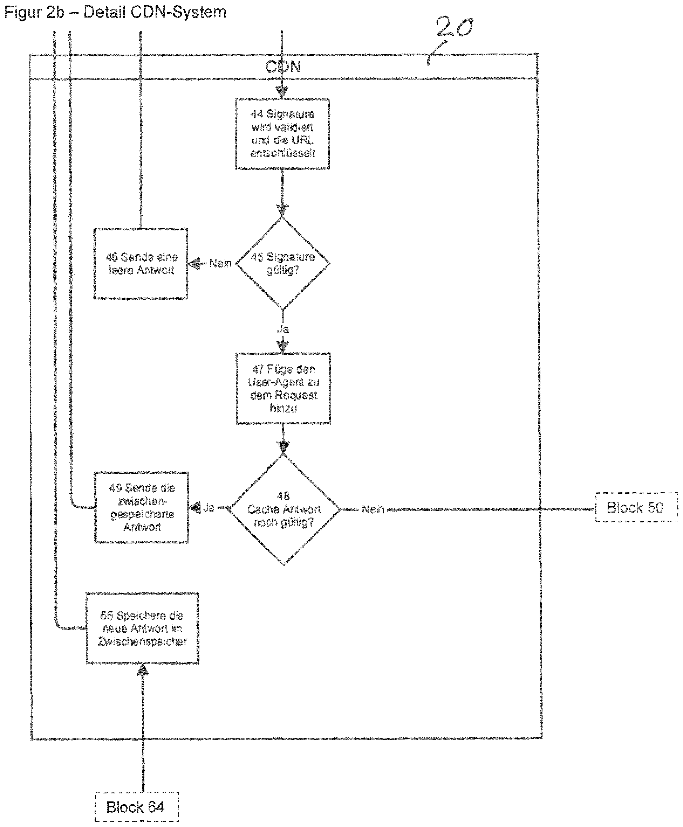

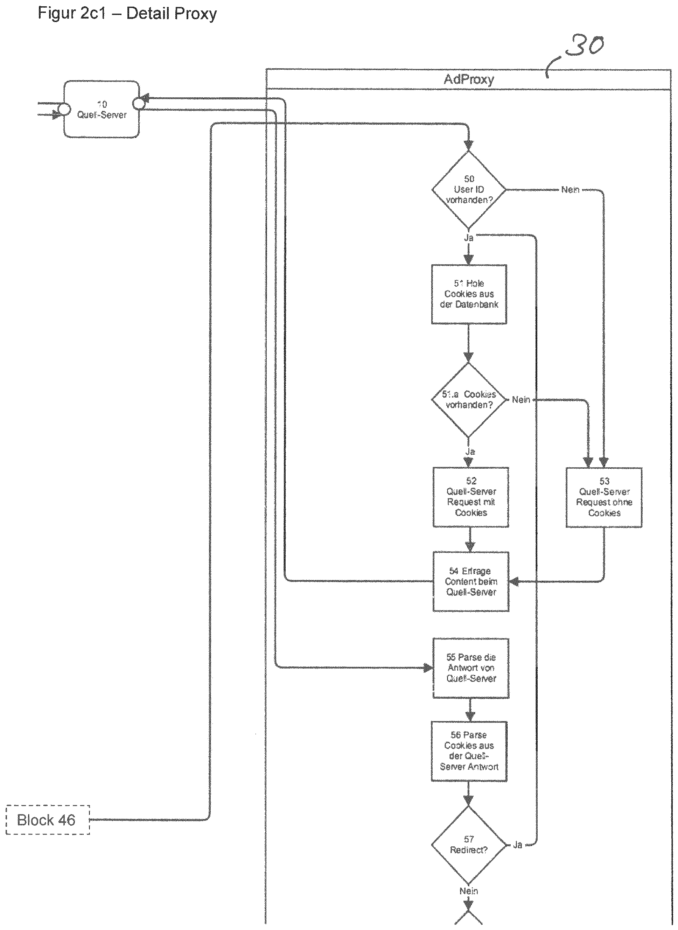

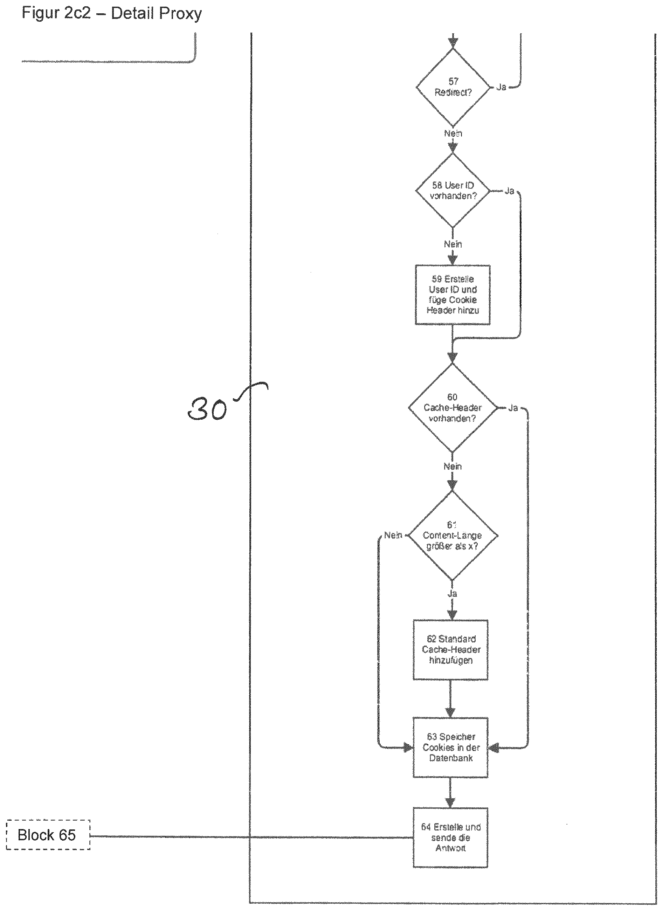

Als Umgehungslösung wird erfindungsgemäß eine Modifikation des CDN-Systems 20 in Kombination mit einem Proxy-Server 30, der die Kommunikation zwischen Content Delivery Network 20 und Werbemittelserver 10 übernimmt, vorgeschlagen. Der Proxy-Server 30 ist zudem mit einer Cookie-Datenbank 31 ausgestattet, die die Speicherung und Verwaltung bestehender Nutzercookies übernimmt. Ein wesentlicher Aspekt ist zudem die Modifikation der Clienteinrichtung 1, genauer genommen der Videoplayersoftware. Die erfindungsgemäßen Kernaspekte lassen sich anschaulich mit Hilfe eine Ablaufdiagramms verdeutlichen, das aus Gründen der besseren Darstellbarkeit auf die Figuren 2a, 2b 2c1, 2c2 aufgeteilt wurde.

Nachdem der in eine Website eingebettete Videoplayer 1 clientseitig zur Ausführung kommt (Block 41), führt dieser zunächst einen an den Werbemittelserver 10 adressierten http-Request aus. Ist dieser Request erfolgreich, wird playerseitig vermutet, dass kein Werbungsblocker aktiv ist. Die Werbemittelanfrage kann dann unmittelbar an den Werbemittelserver 10 gerichtet werden, dieser dann die entsprechenden Werbemittel unmittelbar dem Videoplayer 1 zur Verfügung stellt.

Ist der Werbemittelserver 10 über den http-Request nicht erreichbar (Prüfung in Block 42), beispielsweise wegen Zeitablaufs oder einer sonstigen Ausnahme, setzt der Videoplayer 1 die Werbemittelabfrage auf Grundlage des erfindungsgemäßen Verfahrens fort.

In diesem Fall verschlüsselt der Videoplayer 1 die original Zieladresse des Werbemittelservers 10 in Form einer URL (Block 43). Zusätzlich wird eine Signatur auf Grundlage der verschlüsselten URL sowie ein Zeitstempel generiert. Die verschlüsselte URL, Signatur und Zeitstempel werden in einer http-Anfrage an das CDN-System 20 übermittelt. Der Zeitstempel kann bspw. eine Gültigkeit der Anfrage für einen bestimmten Zeitrahmen definieren, exemplarisch sei ein Zeitrahmen von etwa 1 Stunde genannt.

Nach Empfang der entsprechenden Anfrage im CDN-System 20 führt dieses eine Funktion (Block 44) aus, um zunächst die Gültigkeit der gestellten Anfrage des Videoplayers 1 zu überprüfen. Hierbei wird die Signatur auf ihre Gültigkeit geprüft, um die Herkunft der Anfrage zu validieren. Bspw. sollen nur Anfragen bekannter und zulässiger Videoplayer bearbeitet werden. Auch der Zeitstempel muss innerhalb des zulässigen Zeitfensters liegen, um veraltete Anfragen aussortieren zu können.

Sind Signatur und Zeitstempel valide (Block 45), extrahiert das CDN-System 20 zunächst die verschlüsselte URL aus der gestellten Anfrage und entschlüsselt diese. Andernfalls wird eine Fehlermeldung an die Clienteinrichtung ausgegeben (Block 46).

Weiterhin wird der empfangenen Anfrage der User Agent String hinzugefügt, der Informationen zur anfragenden Clienteinrichtung beinhaltet (Block 48). Anschliessend wird auf Grundlage der entschlüsselten URL geprüft, ob bereits passende Werbemittel im Cachespeicher des CDN-Systems 20 vorgesehen sind und ob diese nach wie vor gültig sind. Als Kriterium für ein passendes Werbemittel wird die empfangene entschlüsselte URL als auch eine empfange Information zu der durch die Clienteinrichtung besuchten Website (Origin-Header) verwendet, d.h. Informationen zu derjenigen Webseite, die den Videoplayer 1 zur Ausführung auf der Clienteinrichtung bringt. Die Gültigkeit der Werbemittel kann bspw. mittels eines Cache-Headers bei der Befüllung des Cachespeichers festgelegt werden. Ist dies der Fall, kann die Auslieferung von Werbemitteln direkt aus dem Cachespeicher 21 an die Clienteinrichtung 1 erfolgen (Block 49). Ist dies nicht der Fall, muss das CDN-System 20 zunächst passende Werbemittel von dem Werbemittelserver 10 abfragen, was nachfolgend näher ausgeführt werden soll.

In diesem Fall leitet das CDN-System 10 die Werbemittelanfrage zusammen mit der entschlüsselten URL des Werbemittelservers 10 und dem User Agent String der Clienteinrichtung 1 an den Proxy-Server 30 weiter.

Der Proxy-Server 30 überprüft die empfangene Anfrage daraufhin, ob im Anfrage-Header bereits eine entsprechende User ID zur Nutzeridentifikation des die Clienteinrichtung 1 bedienenden Nutzers vorhanden ist (Block 50). Dies wird anhand des gegebenenfalls mitgelieferten User-Cookies ermittelt. Die User ID kann ein zufällig generierter Wert zur Identifikation bzw. Wiedererkennung des Nutzers sein. Wenn eine solche User ID existiert, werden dem Nutzer zugeordnete Cookies aus der Datenbank 31 abgerufen (Block 51). Sind entsprechende Cookie-Einträge vorhanden (Block51a), wird eine Werbemittelanfrage an den Werbemittelserver 10 generiert, die um die passenden Cookie-Einträge aus der Datenbank 31 ergänzt ist (Block 52). Im Anschluss (Block 54) wird die Anfrage an den Werbemittelserver 10 übertragen. Die beigefügten Cookies erlauben eine nutzerbezogene Auswahl eines passenden Werbemittels innerhalb des Werbungsmittelservers 10. Existieren zur User ID noch keine passenden Datenbankeinträge in der Cookie-Datenbank 31, so wird eine allgemeine Werbemittelanfrage ohne Cookies generiert (Block 53) und an den Werbemittelserver 10 übertragen (Block 54).

Der Werbemittelserver 10 beantwortet die gestellte Werbemittelanfrage in üblicher Weise und wählt wenigstens ein auf den Nutzer zugeschnittenes Werbemittel aus, das entweder mit der die Anfrage beantwortenden VAST XML Datei an den Proxy-Server 30 übertragen oder alternativ innerhalb der VAST XML Datei entsprechend verlinkt wird, um das ausgewählte Werbemittel dann von einem Drittserver abholen zu können.

Im Block 55 wird die empfangene VAST-Antwort im Proxy-Server 30 mittels Parsing-Prozess ausgewertet und die dort eingebetteten Cookies extrahiert (Block 56). Zudem wird geprüft (Block 57), ob die Werbemittel in der empfangenen Antwort (VAST XML-Datei) enthalten sind oder ob stattdessen eine Weiterleitung auf einen Drittserver vorgesehen ist. Im Falle letzteres werden die Verfahrensschritte 51 fortfolgende erneut ausgeführt, wobei die Werbemittelanfrage nunmehr an den angegebenen Drittserver gerichtet wird.

Enthält die VAST XML-Datei bereits das gewünschte Werbemittel, so wird eine zugeordnete User ID der Antwort bestimmt (Block 58). Existiert keine User ID, wird diese entsprechend durch den Proxy-Server erstellt (Block 59). Im Anschluss wird die Antwort des Werbemittelservers 10 auf einen darin enthaltenen Cache Header überprüft (Block 60). Existiert ein solcher Header nicht, wird die Größe der mitgelieferten Werbemittel überprüft. Ist dieses größer als ein definierbarer Grenzwert, im vorliegenden Ausführungsbeispiel größer als 2 MB, so wird ein passender Default Cache Header in die Antwort eingesetzt. Ist die Datengröße der mitgelieferten Werbemittel kleiner als 2 MB, ist diese Vorgehensweise nicht notwendig.

Als letztes werden die in der Antwort des Werbemittelservers 10 enthaltenen Cookies in der Datenbank 31 des Proxy-Servers 30 gespeichert (Block 63). Letztendlich wird die Antwort des Werbemittelservers 10 mit den darin enthaltenen Werbemitteln an das CDN-System 20 übertragen. Das CDN-System 20 entscheidet anhand des mitübertragenen Cache Headers, ob die Werbemittel in dem vorgesehenen Cachespeicher abgelegt (Block 65) werden sollen. Zuletzt werden diese der Clienteinrichtung 1 zum Abruf bereitgestellt.

Nachfolgend soll noch ein konkretes Beispiel für eine mögliche http-Anfrage einer Clienteinrichtung nach Werbemitteln an einen Google DoubleClick Adserver aufgezeigt werden. Diese Zieladresse des Werbemittelservers ist bspw. im Videoplayer hinterlegt.

*https:*//*pubads.g.doubleclick.net*/*gampad*/*ads?sz=640x480&iu=*/*124319096*/*external*/*single_ ad_samples&ciu_szs=300x250&impl=s&gdfp_req=1&env=vp&output=vast&unviewed_posi tion_start=1&cust_params=deployment%3Ddevsite%26sample_ct%3Dlinear&correlator*=

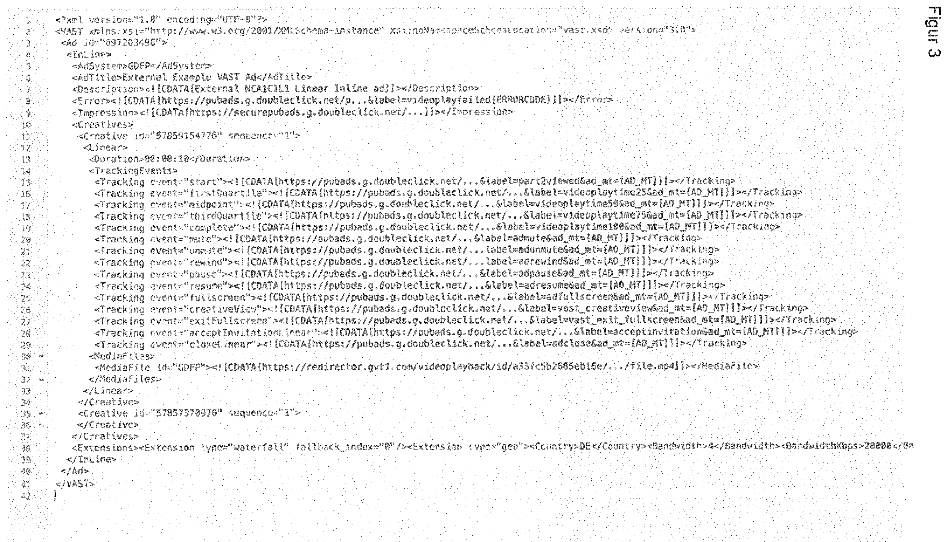

In Beantwortung einer solchen als http-Request gestellten Anfrage antwortet der Werbemittelserver 10 mit einem üblichen VAST XML File, das beispielhaft in der Figur 3 dargestellt ist. Dieses kann entweder die notwendigen Werbemittel beinhalten oder aber einen Link auf einen Werbemittelserver eines Drittanbieters vorsehen, von dem die entsprechenden Werbemittel abzurufen sind. Das VAST XML File kann neben dem Werbemittel wie Media Files auch Steuerinformationen zum Abspielen des Werbemittels sowie etwaige Tracking-Pixel enthalten, die Möglichkeiten darstellen, um die erfolgreiche Ausspielung des Werbemittels nachvollziehen zu können.

Die Verschlüsselung der oben wiedergegebenen Werbemittelanfrage, d.h. der zuvor zitierten URL, kann clientseitig durch ein AES-Verfahren erfolgen. Ein Beispiel der dementsprechend modifizierten Werbemittelanfrage ist nachfolgend eingeblendet.

https://example.glomex-endpoint.com/**U2FsdGVkX1-yZ-akCxEo8b17cXIWqfNx0U1nWZJ0tZvvOnqnB717ACaHupT8yZi7RKADpmWDLdwCE-U7Es6ZuwZAYqnHbtCSBo3cjcs41I2Uiol0kKSgG_olNad_4M5rxGncD8oi79YbsWIIVA9 6YIECGPHOEHhv6qB9hJ6UB5r8duaN0wkzg9N-ju4fNzdZk7G36brW4e-RRxcxSKVZ3jIuLT63wSsWNQbi4ilOVL5VRzo7fGn_giXUVJxiEIF0sW6o4rnIUhIHp-_NzU-n3A4zJONkfqpf5IXMbcd4vYnAM08QxELBrDachDUcJOHPctoCkkof1xHxm_ARhpPjZk TxJFE6DxdCu_i2Vyr0vOPQ**?signature=7468697369736e6f74617369676e6174757265 **&expires=1512385626424**

Diese Werbemittelanfrage ist ebenfalls ein html-Request mit der URL des CDN-Systems 20 und der angehängten verschlüsselten URL des Werbemittelservers 10. Ferner ist die URL um die Signatur und den Zeitstempel erweitert.

Das erfindungsgemäße Verfahren wurde vorstehend zur Übertragung von Werbemitteln beschrieben. Das Verfahren ist jedoch ohne weiteres dazu geeignet, neben den Werbemitteln auch sogenannte Tracking Events und die Übertragung von Cookies zu ermöglichen, da solche Vorgänge üblicherweise auch durch installierte Werbungsblocker blockiert werden können. In diesem Fall werden auch sogenannte Tracking Events verschlüsselt und über das CDN-System 20 als auch den Proxy-Server 30 an den Werbemittelserver 10 oder einen sonstigen Drittanbieter übermittelt, wodurch eine Blockade durch einen installierten Werbemittelblocker effektiv verhindert werden kann. Sobald bei dem Verfahren eine entsprechende Kommunikation zwischen den einzelnen Komponenten der Figur 1 unterbrochen wird, scheitert letztendlich auch die Auslieferung und Darstellung des eigentlichen Inhaltes, d.h. des Videoinhaltes am Videoplayer der Clienteinrichtung 1.

## Patentansprüche

1. Verfahren zum Ausliefern von Werbemitteln von einem Werbemittelserver an eine Clienteinrichtung vor, während oder nach dem Abruf medialer Inhalte von einem CDN-System, wobei
die Clienteinrichtung zur Abfrage von Werbemitteln die Zieladresse des Werbemittelservers verschlüsselt und,
eine Anfrage an das CDN-System stellt, in der die verschlüsselte Zieladresse des Werbemittelservers enthalten ist,
das CDN-System die verschlüsselte Zieladresse aus der Anfrage extrahiert und diese entschlüsselt, um Werbemittel von dem adressierten Werbemittelserver abzurufen und diese der Clienteinrichtung bereitzustellen.

2. Verfahren nach Anspruch 1, **dadurch gekennzeichnet, dass** die Kommunikation zwischen Clienteinrichtung und CDN-System, insbesondere die Übermittlung der Anfrage per http-Protokoll erfolgt, insbesondere per http-Request.

3. Verfahren nach einem der vorhergehenden Ansprüche, **dadurch gekennzeichnet, dass** die Clienteinrichtung der Anfrage an das CDN-System neben der verschlüsselten Zieladresse eine Signatur und/oder einen Zeitstempel hinzufügt, wobei die Signatur vorzugsweise auf Grundlage der verschlüsselten Zieladresse der Werbemittelservers generiert wird.

4. Verfahren nach Anspruch 3, **dadurch gekennzeichnet, dass** das CDN-System die Gültigkeit der empfangenen Anfrage anhand der darin enthaltenen Signatur und/oder des darin enthaltenen Zeitstempels prüft und eine Bereitstellung von Werbemitteln nur im Fall einer positiven Prüfung veranlasst.

5. Verfahren nach einem der vorhergehenden Ansprüche, **dadurch gekennzeichnet, dass** das CDN-System einen Cachespeicher vorsieht und basierend auf der empfangenen Anfrage und der entschlüsselten Zieladresse prüft, ob bereits geeignete Werbemittel im Cachespeicher enthalten sind, und bejahendenfalls diese gecachten Werbemittel an die Clienteinrichtung bereitstellt.

6. Verfahren nach einem der vorhergehenden Ansprüche, **dadurch gekennzeichnet, dass** das CDN-System die Anfrage der Clienteinrichtung an einen Proxy-Server weiterleitet, insbesondere falls keine passenden Werbemittel im Cachespeicher enthalten sind, wobei der Anfrage vorab die entschlüsselte Zieladresse des Werbemittelservers und gegebenenfalls ein user agent string der Clienteinrichtung hinzugefügt wird.

7. Verfahren nach Anspruch 6, **dadurch gekennzeichnet, dass** der Proxy-Server mittels der empfangenen Zieladresse des Werbemittelservers Werbemittel von diesem abfragt und dem CDN-System bereitstellt.

8. Verfahren nach Anspruch 7, **dadurch gekennzeichnet, dass** das CDN-System die bereitgestellten Werbemittel im Cachespeicher ablegt und der Clienteinrichtung zur Verfügung stellt.

9. Verfahren nach Anspruch 6, 7 oder 8, **dadurch gekennzeichnet, dass** der Proxy-Server eine Cookie-Datenbank umfasst und die vom CDN-System erhaltene Anfrage zunächst auf eine Nutzerinformation hin überprüft, wobei die Cookie-Datenbank anhand der Nutzerinformation auf dem Nutzer zuordenbare Cookie-Einträge durchsucht wird und der Proxy-Server bei der Abfrage der Werbemittel von dem adressierten Werbemittelserver gegebenenfalls dem Nutzer zugeordnete Cookies an den Werbemittelserver überträgt.

10. Verfahren nach Anspruch 9, **dadurch gekennzeichnet, dass** der Proxy-Server aus der das oder die Werbemittel bereitstellenden Antwort des Werbemittelservers Cookies extrahiert und in der Cookie-Datenbank ablegt.

11. Verfahren nach Anspruch 10, **dadurch gekennzeichnet, dass** die extrahierten Cookies bestehende Cookies eines mittels der Nutzerinformation identifizierten Nutzers aktualisieren oder, für den Fall das zur Nutzerinformation keine Einträge in der Cookie-Datenbank existieren, ein entsprechende Eintrag erstellt und die extrahierten Cookies gespeichert werden.

12. Verfahren nach einem der Ansprüche 6 bis 11, **dadurch gekennzeichnet, dass** der Proxy-Server die das oder die Werbemittel bereitstellende Antwort des Werbemittelservers auf einen Cache Header überprüft und sofern kein Cache Header vorgesehen ist, ein vorgegebenen Cache Header eingefügt wird, falls die Größe der bereitgestellten Werbemittel einen vordefinierten Grenzwert überschreitet.

13. Verfahren nach einem der vorhergehenden Ansprüche, **dadurch gekennzeichnet, dass** die Clienteinrichtung zunächst überprüft, ob ein Werbungsblocker installiert bzw. aktiv ist und das Verfahren nur bei aktivem Werbungsblocker ausgeführt wird.

14. System zur Durchführung des Verfahrens nach einem der vorhergehenden Ansprüche.

15. Clienteinrichtung zur Durchführung des erfindungsgemäßen Verfahrens.
